# EUROPEAN PATENT APPLICATION

(11) **EP 4 372 557 A1**
(43) Date of publication of application: **22.05.2024**
(21) Application number: 22855460.6
(22) Date of filing: 10.08.2022
(51) Int. Cl.: G06F 9/455, G06F 12/0815

(54) **CODE PROCESSING METHOD UNDER HARDWARE MEMORY ORDER ARCHITECTURE, AND CORRESPONDING APPARATUS**

(30) Priority: 13.08.2021 CN 202110930181
(71) Applicant: Huawei Technologies Co., Ltd., Shenzhen, Guangdong 518129 (CN)
(72) Inventor: CHEN, Geng, Shenzhen, Guangdong 518129 (CN); FU, Ming, Shenzhen, Guangdong 518129 (CN); LEI, Jitang, Shenzhen, Guangdong 518129 (CN)
(74) Representative: Gill Jennings & Every LLP
(86) International application number: PCT/CN2022/111385
(87) International publication number: WO 2023/016480

(57) **Abstract**

A code processing method in a hardware memory order architecture is provided, which is applied to a computer system, and is particularly applicable to a scenario of code migration in different hardware memory order architectures. The method includes: obtaining a first file in a compilation process, where the first file is associated with a source file; converting volatile memory access code in object code of the first file into atomic memory access code, to obtain a second file, where the object code is memory access code related to concurrency control; and performing compilation processing on the second file, to obtain an executable file suitable for a target architecture, where the target architecture is a strong memory order architecture or a weak memory order architecture. According to the method, code execution after code migration may be consistent with code writing, so that an unexpected behavior of code such as suspension or deadlock during running is reduced.

## Description

This application claims priority to Chinese Patent Application No. 202110930181.8, filed with the China National Intellectual Property Administration on August 13, 2021 and entitled "CODE PROCESSING METHOD IN HARDWARE MEMORY ORDER ARCHITECTURE AND CORRESPONDING APPARATUS", which is incorporated herein by reference in its entirety.

### TECHNICAL FIELD

This application relates to the field of computer technologies, and specifically, to a code processing method in a hardware memory order architecture and a corresponding apparatus.

### BACKGROUND

When a processor invokes a thread to operate a memory, in some memory order architectures, an actual code execution order is consistent with a code writing order, and memory accesses are not reordered. However, in some memory order architectures, for example, some weak memory order architectures (for example, advanced reduced instruction set computing machine (advanced RISC machine, ARM), reduced instruction set computing five (reduced instruction set computing five, RISC-V), or performance optimization with enhanced reduced instruction set computing (performance optimization with enhanced RISC, POWER)), the processor usually reorders memory accesses based on an execution status. Reordering may make the actual code execution order of the processor inconsistent with the code writing order, causing an unexpected behavior.

In a code migration scenario, code that runs normally in a memory order architecture is migrated to another memory order architecture. Because the processor reorders memory accesses, there is a high probability that the migrated code runs abnormally in the new memory order architecture, causing an unexpected behavior. Especially for code related to concurrency control, an error probability is higher after the code is migrated.

### SUMMARY

This application provides a code processing method in a hardware memory order architecture, to reduce an unexpected behavior of code during running in a hardware memory order architecture. Embodiments of this application further provide a corresponding device, a computer-readable storage medium, a computer program product, and the like.

A first aspect of this application provides a code processing method in a hardware memory order architecture, applied to a computer system and including: obtaining a first file in a compilation process, where the first file is associated with a source file; converting volatile memory access code in object code of the first file into atomic memory access code, to obtain a second file, where the object code is memory access code related to concurrency control; and performing compilation processing on the second file, to obtain an executable file suitable for a target architecture, where the target architecture is a strong memory order architecture or a weak memory order architecture.

In this application, the code processing method is applied to a computer device. The computer device may be a server, a terminal device, or a virtual machine (virtual machine, VM).

In this application, a hardware memory order architecture usually includes a strong memory order architecture and a weak memory order architecture. The weak memory order architecture is relative to the strong memory order architecture. Both the weak memory order architecture and the strong memory order architecture are instruction set architectures. The strong memory order architecture may include an x86 architecture. The weak memory order architecture may include advanced reduced instruction set computing machine (advanced RISC machine, ARM), reduced instruction set computing five (reduced instruction set computing five, RISC-V), or performance optimization with enhanced reduced instruction set computing (performance optimization with enhanced RISC, POWER).

The code processing method provided in this application may be applied to a code migration scenario. There are two code migration scenarios. In one code migration scenario, after the source file is migrated from a source architecture to the target architecture, the target architecture performs a code processing process in this application to obtain the executable file suitable for the target architecture. In the other code migration scenario, a source architecture performs a data processing process in this application on the source file to obtain the executable file suitable for the target architecture, and then sends the executable file to the target architecture.

The code processing method provided in this application may also be applied to a code repair scenario, that is, a scenario in which source code included in the source file may have an error, and an architecture running the source file performs a code processing process in this application to repair the source code.

In this application, the source architecture may be a strong memory order architecture or a weak memory order architecture, and the target architecture may be a strong memory order architecture or a weak memory order architecture. For example, the source architecture is a strong memory order architecture (x86), and the target architecture is a weak memory order architecture (ARM). Alternatively, the source architecture is a weak memory order architecture (ARM), and the target architecture is a strong memory order architecture (x86). Alternatively, the source architecture is a strong memory order architecture (x86), and the target architecture is a strong memory order architecture (scalable processor architecture version 9 (Scalable Processor ARChitecture version 9, SPARC V9)). Alternatively, the source architecture is a weak memory order architecture (ARM), and the target architecture is a weak memory order architecture (RISC-V).

In this application, the code processing method may be performed in the compilation process, and a processor runs code of a compiler to complete the corresponding code processing process.

In this application, the first file may be the source file, or may be an intermediate representation (intermediate representation, IR) in the compilation process.

In this application, the intermediate representation is an internal representation generated after the compiler scans a source program, and represents a semantic structure of the source program. Analysis or optimization transformation is performed on the IR in each phase of a middle end of the compiler. Therefore, the IR has great impact on an overall structure, efficiency, and robustness of the compiler.

In this application, the source file may be a C/C++ source file.

In this application, the memory access code related to concurrency control may be understood as code other than a driver (driver).

In this application, volatile is a keyword in C/C++. The keyword is for preventing compiler optimization. When the processor runs code, an order of volatile memory accesses does not change, but an order of other memory accesses may change. Therefore, a code execution order cannot be consistent with a code writing order.

In this application, atomic is an atomic keyword in a C/C++ version (C11/C++11). When a variable is declared, the atomic keyword may be added to implement atomic encapsulation of a data structure such as an integer (int), a character (char), or a boolean (bool). An access to a variable declared as atomic can be performed only through an atomic operation. By default, if no qualifier (for example, acquire (acquire) and release (release)) is added to a memory access order, an atomic memory access indicates a sequentially consistent atomic memory access.

It may be learned from the first aspect that the volatile memory access code in the memory access code related to concurrency control may be converted into the atomic memory access code in the compilation process. The atomic memory access may ensure that code execution during execution of the program by the processor is consistent with code writing, so that an unexpected behavior of code such as suspension or deadlock during running is reduced.

In a possible implementation of the first aspect, the method further includes: deleting a separate memory fence in the object code. The separate memory fence is a separate inline assembly instruction in the object code. The separate inline assembly instruction is a memory fence instruction.

In this possible implementation, the separate memory fence is deleted, so that code performance may be further improved.

In a possible implementation of the first aspect, the first file is the source file including the source code. The source file includes inline assembly code suitable for the source architecture. The method further includes: converting the inline assembly code suitable for the source architecture into inline assembly code or a compiler built-in function capable of running in the target architecture. The source architecture and the target architecture are two different hardware memory order architectures.

In this possible implementation, the compiler built-in function (compiler builtins) is a function suitable for a plurality of hardware architectures. In the code migration scenario, the inline assembly code suitable for the source architecture is generally not suitable for the target architecture. The inline assembly code suitable for the source architecture is automatically converted into the inline assembly code or the compiler built-in function capable of running in the target architecture, so that code conversion efficiency is improved. Therefore, a code processing speed is improved.

In a possible implementation of the first aspect, the first file is a first intermediate representation. The second file is a second intermediate representation. The step of obtaining a first file in a compilation process includes: obtaining the source file corresponding to the source architecture, where the source file includes inline assembly code suitable for the source architecture; converting the inline assembly code suitable for the source architecture into inline assembly code or a compiler built-in function capable of running in the target architecture, to obtain an intermediate file, where the source architecture and the target architecture are two different hardware memory order architectures; and converting the intermediate file into the first intermediate representation.

In this possible implementation, the compiler built-in function (compiler builtins) is a function suitable for a plurality of hardware architectures. In the code migration scenario, the inline assembly code suitable for the source architecture is generally not suitable for the target architecture. The inline assembly code suitable for the source architecture is automatically converted into the inline assembly code or the compiler built-in function capable of running in the target architecture, so that code conversion efficiency is improved. Therefore, a code processing speed is improved.

In a possible implementation of the first aspect, the step of converting the inline assembly code suitable for the source architecture into inline assembly code or a compiler built-in function capable of running in the target architecture, to obtain an intermediate file includes: converting the inline assembly code suitable for the source architecture into an abstract syntax tree (abstract syntax tree, AST); and converting, based on semantics of each branch in the abstract syntax tree, each branch into inline assembly code or a compiler built-in function suitable for the target architecture, to obtain the intermediate file.

In this possible implementation, the AST is an abstract representation of a syntax structure of the source code, and represents a syntax structure of programming language in a tree form. Each node on the tree indicates a structure in the source code. The source program corresponds to the abstract syntax tree one to one. Semantic equivalent translation with the AST may implement fast conversion of the inline assembly code.

In a possible implementation of the first aspect, a code scale in the source file is not limited, and may include many lines, for example, more than 10,000 lines, or may include dozens of lines or hundreds of lines.

A second aspect of this application provides a code processing apparatus in a hardware memory order architecture. The code processing apparatus in a hardware memory order architecture has a function of implementing the method in the first aspect or any possible implementation of the first aspect. The function may be implemented by hardware, or may be implemented by corresponding software executed by hardware. The hardware or the software includes one or more modules corresponding to the foregoing function, for example, an obtaining unit, a first processing unit, and a second processing unit. The three units may be implemented by one or more processing units.

A third aspect of this application provides a computer device. The computer device includes at least one processor, a memory, an input/output (input/output, I/O) interface, and computer-executable instructions that are stored in the memory and that may run on the processor. When the computer-executable instructions are executed by the processor, the processor performs the method in the first aspect or any possible implementation of the first aspect.

A fourth aspect of this application provides a computer-readable storage medium storing one or more computer-executable instructions. When the computer-executable instructions are executed by one or more processors, the one or more processors perform the method in the first aspect or any possible implementation of the first aspect.

A fifth aspect of this application provides a computer program product storing one or more computer-executable instructions. When the computer-executable instructions are executed by one or more processors, the one or more processors perform the method in the first aspect or any possible implementation of the first aspect.

A sixth aspect of this application provides a chip system. The chip system includes at least one processor. The at least one processor is configured to support a resource management apparatus in implementing a function in the first aspect or any possible implementation of the first aspect. In a possible design, the chip system may further include a memory. The memory is configured to store program instructions and data that are necessary for the resource management apparatus. The chip system may include a chip, or may include a chip and another discrete device.

### BRIEF DESCRIPTION OF DRAWINGS

FIG. 1 is a schematic diagram of a structure of a computer system according to an embodiment of this application;
FIG. 2 is a schematic diagram of a code migration scenario according to an embodiment of this application;
FIG. 3 is a schematic diagram of an example of a code order and an execution order according to an embodiment of this application;
FIG. 4 is a schematic diagram of another example of a code order and an execution order according to an embodiment of this application;
FIG. 5 is another schematic diagram of a code migration scenario according to an embodiment of this application;
FIG. 6 is a schematic diagram of a code repair scenario according to an embodiment of this application;
FIG. 7 is a schematic diagram of a structure of a compiler according to an embodiment of this application;
FIG. 8 is a schematic diagram of another structure of a compiler according to an embodiment of this application;
FIG. 9 is a schematic diagram of an embodiment of a code processing method in a hardware memory order architecture according to an embodiment of this application;
FIG. 10 is a schematic diagram of another embodiment of a code processing method in a hardware memory order architecture according to an embodiment of this application;
FIG. 11A is a schematic diagram of an example according to an embodiment of this application;
FIG. 11B is a schematic diagram of another example according to an embodiment of this application;
FIG. 12A is a schematic diagram of another example according to an embodiment of this application;
FIG. 12B is a schematic diagram of another example according to an embodiment of this application;
FIG. 13 is a schematic diagram of another embodiment of a code processing method in a hardware memory order architecture according to an embodiment of this application;
FIG. 14A is a schematic diagram of another example according to an embodiment of this application;
FIG. 14B is a schematic diagram of another example according to an embodiment of this application;
FIG. 15 is an effect comparison diagram according to an embodiment of this application;
FIG. 16 is a schematic diagram of a structure of a code processing apparatus in a hardware memory order architecture according to an embodiment of this application; and
FIG. 17 is a schematic diagram of a structure of a computer device according to an embodiment of this application.

### DESCRIPTION OF EMBODIMENTS

The following describes embodiments of this application with reference to the accompanying drawings. It is clear that the described embodiments are merely some but not all the embodiments of this application. A person of ordinary skill in the art may learn that with development of technologies and emergence of a new scenario, the technical solutions provided in embodiments of this application are also applicable to a similar technical problem.

In the specification, claims, and accompanying drawings of this application, terms such as "first" and "second" are intended to distinguish between similar objects but do not necessarily indicate a specific order or sequence. It should be understood that data termed in such a way are interchangeable in proper circumstances, so that embodiments described herein can be implemented in orders other than content illustrated or described herein. In addition, terms "include" and "have" and any variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a code processing method in a hardware memory order architecture, to reduce an unexpected behavior of code during running in a hardware memory order architecture. Embodiments of this application further provide a corresponding device, a computer-readable storage medium, a computer program product, and the like. The following separately provides detailed descriptions.

The hardware memory order architecture usually includes a strong memory order architecture and a weak memory order architecture. The weak memory order architecture is relative to the strong memory order architecture. Both the weak memory order architecture and the strong memory order architecture are instruction set architectures. The strong memory order architecture may include an x86 architecture. The weak memory order architecture may include advanced reduced instruction set computing machine (advanced RISC machine, ARM), reduced instruction set computing five (reduced instruction set computing five, RISC-V), or performance optimization with enhanced reduced instruction set computing (performance optimization with enhanced RISC, POWER).

When a processor in a computer system runs code, memory accesses may be reordered based on an execution status, to ensure that a pipeline is used to a maximum extent. As shown in Table 1, different reordering types may be included in different hardware memory order architectures.

**Table 1 Instruction execution reordering type of a weak memory order hardware platform**

| Reordering type | ARM64 | x86 | RISC-V |
|---|---|---|---|
| Loads reordered after loads | Y | | Y |
| Load instructions in a front of an instruction stream are executed after load instructions in a back | | | |
| Loads reordered after stores | Y | | Y |
| The load instructions in the front of the instruction stream are executed after store instructions in the back | | | |
| Stores reordered after stores | Y | | Y |
| Store instructions in the front of the instruction stream are executed after the store instructions in the back | | | |
| Stores reordered after loads | Y | Y | Y |
| The store instructions in the front of the instruction stream are executed after the load instructions in the back | | | |
| Atomic reordered with loads | Y | | Y |
| Atomic operation instructions and the load instructions in the instruction stream are executed in an opposite order | | | |
| Atomic reordered with stores | Y | | Y |
| The atomic operation instructions and the store instructions in the instruction stream are executed in an opposite order | | | |
| Dependent loads reordered | Y | | Y |
| The latter of two loads in the instruction stream depends on an output of the former, but is first executed | | | |
| Incoherent instruction cache pipeline | Y | Y | Y |
| Incoherent instructions are executed in parallel | | | |

From the perspective of the processor, data-independent memory reordering is not a problem, and proper reordering greatly improves overall execution efficiency. However, the hardware memory order architecture usually includes a strong memory order architecture and a weak memory order architecture. Code in the strong memory order architecture may be migrated to the weak memory order architecture to run, and code in the weak memory order architecture may also be migrated to the strong memory order architecture to run. As a result, reordering may cause an unexpected behavior such as suspension or deadlock when code capable of running normally in a source architecture is migrated to a target architecture. In addition, a memory order relationship is not correctly set by a programmer for some code during programming. As a result, a behavior of the code during running in an architecture in which the code is located is inconsistent with a behavior expected by the programmer.

In embodiments of this application, the source architecture may be a strong memory order architecture or a weak memory order architecture, and the target architecture may be a strong memory order architecture or a weak memory order architecture.

An embodiment of this application provides a code processing method in a hardware memory order architecture, to resolve the unexpected behavior caused by memory reordering when the code is migrated from the source architecture to the target architecture to run and an unexpected behavior caused by a possible error code in a current architecture during running. The method is applied to a computer system. The computer system may be a server, a terminal device, a virtual machine (virtual machine, VM), or a container (container).

The server may be a physical machine of any form.

The terminal device (which may also be referred to as user equipment (user equipment, UE)) is a device with a wireless transceiver function. The device may be deployed on land, including an indoor or outdoor device, a handheld device, or a vehicle-mounted device, may be deployed on water (for example, on a ship), or may be deployed in air (for example, on an airplane, a balloon, or a satellite). The terminal device may be a personal computer (personal computer, PC), a mobile phone (mobile phone), a tablet computer (pad), a computer with the wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wireless terminal in an internet of things (internet of things, IoT), or the like.

The virtual machine may be located in a cloud, or may be located locally.

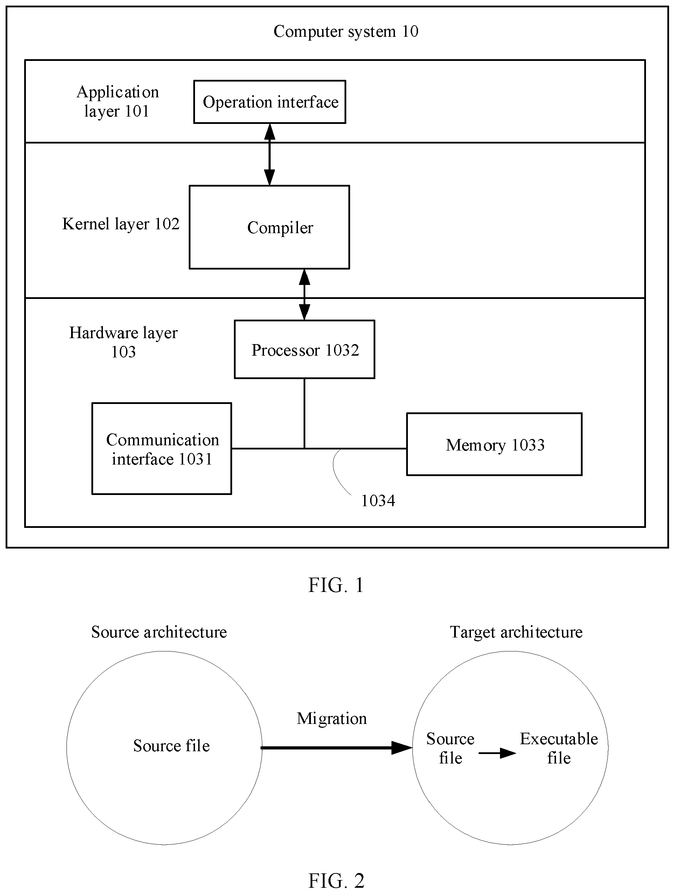

An architecture of the computer system provided in this embodiment of this application may be understood with reference to FIG. 1.

FIG. 1 is a schematic diagram of the architecture of the computer system according to an embodiment of this application.

As shown in FIG. 1, the architecture of the computer system 10 may include an application layer 101, a kernel layer 102, and a hardware layer 103.

The application layer 101 includes an operation interface. A person performing program detection may start a processing process of source code by using the operation interface.

The kernel layer 102 includes a compiler. The compiler is configured to compile a source file, for example, a source file to be migrated from the source architecture to the target architecture, a source file that has been migrated from the source architecture to the computer system, or a source file that has an error in the computer system. In this embodiment of this application, the source file is a C/C++ source file.

The hardware layer 103 includes a communication interface 1031, a processor 1032, a memory 1033, a bus 1034, and the like. The communication interface 1031, the processor 1032, and the memory 1033 are connected through the bus 1034. The processor 1032 may include any type of general-purpose computing circuit or dedicated logic circuit, for example, a field programmable gate array (field programmable gate array, FPGA) or an application-specific integrated circuit (application-specific integrated circuit, ASIC). Alternatively, the processor 1032 may be one or more processors coupled to one or more semiconductor substrates, for example, a central processing unit (central processing unit, CPU).

When the computer system runs, the processor may perform a code processing execution process provided in this embodiment of this application, and the processor runs the compiler to perform corresponding steps in this embodiment of this application.

It may be learned from the foregoing descriptions that the code processing method provided in this embodiment of this application may be applied to a code migration scenario, and may also be applied to a code repair scenario. There are two code migration scenarios. In one code migration scenario, after the source file is migrated from the source architecture to the target architecture, the target architecture performs the code processing process in this application to obtain an executable file suitable for the target architecture. In the other code migration scenario, the source architecture performs the data processing process in this application on the source file to obtain an executable file suitable for the target architecture, and then sends the executable file to the target architecture. The code repair scenario is a scenario in which the source code included in the source file may have an error, and an architecture running the source file (in this embodiment of this application, the architecture is referred to as the target architecture, and the architecture is actually any hardware memory order architecture) performs the code processing process to repair the source code. Descriptions are separately provided below.

First: After the source file is migrated from the source architecture to the target architecture, the target architecture performs the code processing process in this application to obtain the executable file suitable for the target architecture.

As shown in FIG. 2, the source file capable of running normally in the source architecture is migrated to the target architecture, and the executable file is generated by the computer system in which the target architecture is installed.

If the source file directly runs in the target architecture, an actual code execution order of the processor for the memory may be inconsistent with a code writing order due to reordering. To ensure that code of the source architecture may perform a same running behavior as that on the source architecture after migrated to the target architecture, in this embodiment of this application, the target architecture translates inline assembly code in the source file into inline assembly code or a compiler built-in function (compiler builtins) suitable for the target architecture, and further processes the source file or an intermediate representation in a compilation process of the compiler, for example, converts volatile memory access (volatile memory access) code in the source file or the intermediate representation into atomic memory access (atomic memory access) code, and deletes a separate memory fence in memory access code related to concurrency control. The separate memory fence is a separate inline assembly instruction in the memory access code related to concurrency control. The separate inline assembly instruction is a memory fence instruction.

The foregoing process of translating the inline assembly code may be manually completed, or may be automatically completed by the computer system. The compiler built-in function may be applied to a variety of hardware memory order architectures.

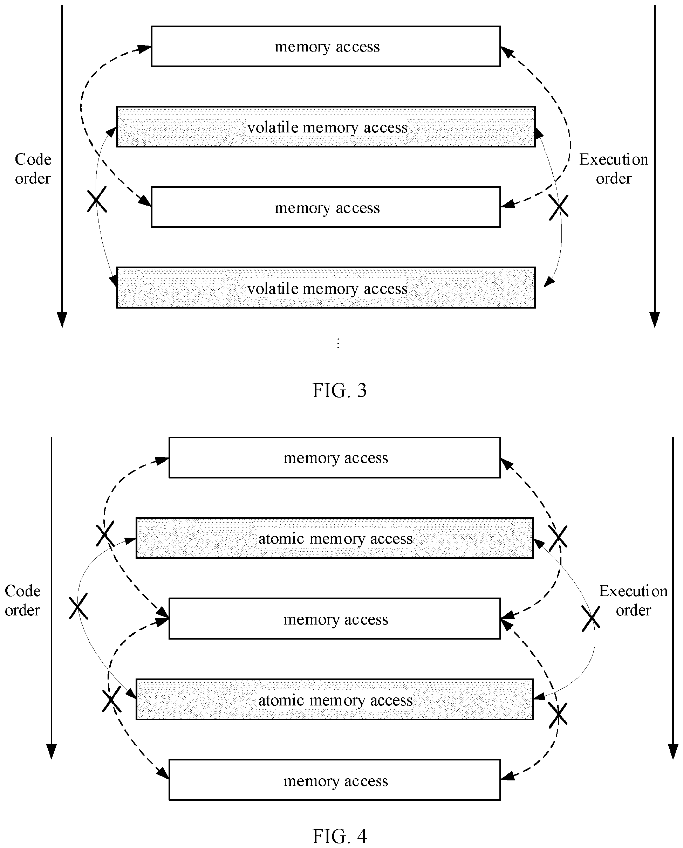

Volatile is a keyword in C/C++. A function of the keyword is to prevent compiler optimization. During compiler optimization, as shown in FIG. 3, when the processor runs code, an order of volatile memory accesses does not change, but an order of other memory accesses may change. Therefore, the volatile memory access cannot ensure that the code execution order is consistent with the code writing order.

Atomic is an atomic keyword in a C language version (C11). When a variable is declared, the atomic keyword may be added to implement atomic encapsulation of a data structure such as an integer (int), a character (char), or a boolean (bool). An access to a variable declared as atomic can be performed only through an atomic operation. An atomic memory access may ensure order consistency.

A memory access includes two types of instructions: read (load) and write (store). Therefore, a sequentially consistent atomic memory access (sequential consistent (SC) atomic memory access) satisfies the following order-preserving relationships.
1: For an SC atomic load, like an acquire load, a memory access instruction after the instruction (in the sense of a programming order) cannot be moved to the front of the instruction during compilation optimization or execution by the processor.
2: For an SC atomic store, like a release store, a memory access instruction before the instruction (in the sense of the programming order) cannot be moved to the end of the instruction during compilation optimization or execution by the processor.
3: If the SC atomic store is followed by the SC atomic load (the programming order) and there is no other SC atomic memory access instruction between the SC atomic store and the SC atomic load, an order of the two instructions cannot be reversed during compilation optimization or execution by the processor.

As shown in FIG. 4, when the processor runs code, an order of atomic memory accesses does not change, and when the foregoing three order-preserving relationships are satisfied, an execution order of memory accesses does also not change. In this way, the execution order when the processor runs the code is consistent with the code writing order, so that order consistency is ensured.

Second: The source architecture performs the data processing process in this application on the source file to obtain the executable file suitable for the target architecture, and then sends the executable file to the target architecture.

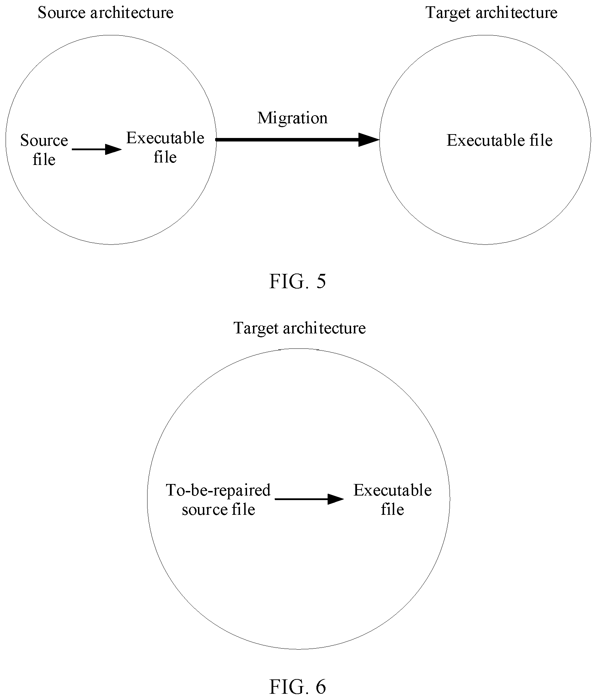

As shown in FIG. 5, to ensure that code of the source architecture may perform a same running behavior as that on the source architecture after migrated to the target architecture, in this embodiment of this application, the source architecture translates inline assembly code in the source file into inline assembly code or a compiler built-in function suitable for the target architecture, and further processes the source file or an intermediate representation in a compilation process of the compiler, for example, converts volatile memory access (volatile memory access) code in the source file or the intermediate representation into atomic memory access (atomic memory access) code, and deletes a separate memory fence in memory access code related to concurrency control. The separate memory fence is a separate inline assembly instruction in the memory access code related to concurrency control. The separate inline assembly instruction is a memory fence instruction. In this scenario, the source architecture performs the code processing process to obtain the executable file, and then sends the executable file to the target architecture, and the target architecture runs the executable file.

An only difference between this scenario and the foregoing scenario in which the target architecture performs code processing lies in an execution body. Other ideas may be understood with reference to the foregoing scenario in which the target architecture performs code processing.

Third: The code is in the target architecture, but the code has an error and needs to be repaired.

As shown in FIG. 6, the code in the source file in the target architecture has an error. The source file is referred to as a to-be-repaired source file. To ensure that the to-be-repaired source file may keep order consistency during running, in this embodiment of this application, the source file or an intermediate representation in a compilation process of the compiler is processed, for example, volatile memory access code in the intermediate representation is converted into atomic memory access code.

In this embodiment of this application, both the code migration scenario and the code repair scenario are implemented by the compiler in the computer system. With reference to the two scenarios, the compiler provided in this embodiment of this application may be a compiler that does not automatically convert the inline assembly code, or a compiler that automatically converts the inline assembly code. With respect to whether the compiler automatically converts the assembly code, an option is configured on the compiler, and whether the compiler automatically converts the inline assembly code is determined by using the option. For example, the option is disabled, and the compiler does not automatically convert the inline assembly code; or the option is enabled, and the compiler automatically converts the inline assembly code.

The following describes the code processing process in this embodiment of this application with reference to functions of modules in the compiler.
First: the compiler that does not automatically convert the inline assembly code

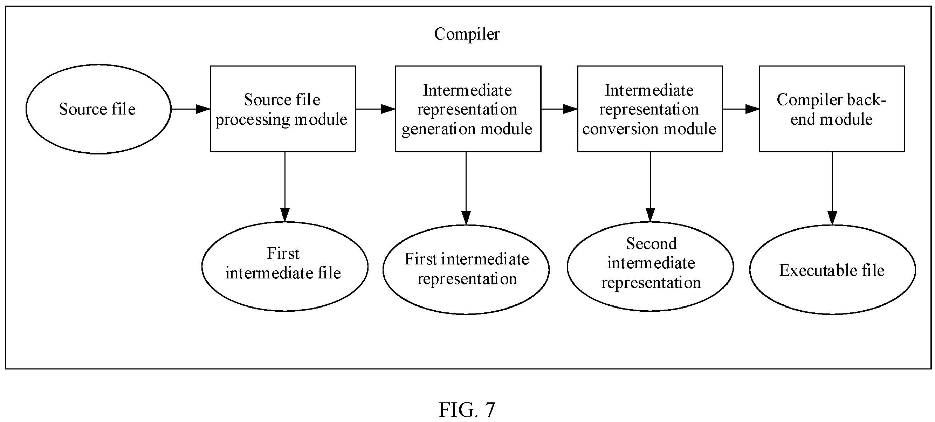

As shown in FIG. 7, the compiler includes a source file processing module, an intermediate representation generation module, an intermediate representation conversion module, and a compiler back-end module.

The source file processing module is configured to obtain the source file, and perform macro expansion processing on the source file, to obtain a first intermediate file. The source file is a C/C++ source file. The source file may be the source file in the source architecture in the code migration scenario, or may be the to-be-repaired source file in the code repair scenario.

In this scenario, the inline assembly code in the source file may be manually translated into the inline assembly code or the compiler built-in function suitable for the target architecture.

In the code repair scenario, the inline assembly code or a compiler built-in function in the source file is already suitable for the target architecture, so that the inline assembly code or the compiler built-in function in the source file does not need to be processed.

The intermediate representation generation module is configured to convert the first intermediate file into a first intermediate representation (intermediate representation, IR).

The IRis an internal representation generated after the compiler scans a source program, and represents a semantic structure and a syntax structure of the source program. Analysis or optimization transformation is performed on the IR in each phase of the compiler. Therefore, the IR has great impact on an overall structure, efficiency, and robustness of the compiler.

The intermediate representation conversion module is configured to convert the first intermediate representation into a second intermediate representation.

The compiler back-end module is configured to process the second intermediate representation as the executable file suitable for the target architecture.

In this scenario, the source file processing module may convert the volatile memory access code in the source file into the atomic memory access code. Alternatively, the intermediate representation conversion module may convert the volatile memory access code in the first intermediate representation into the atomic memory access code.

### Second: the compiler that automatically converts the inline assembly code

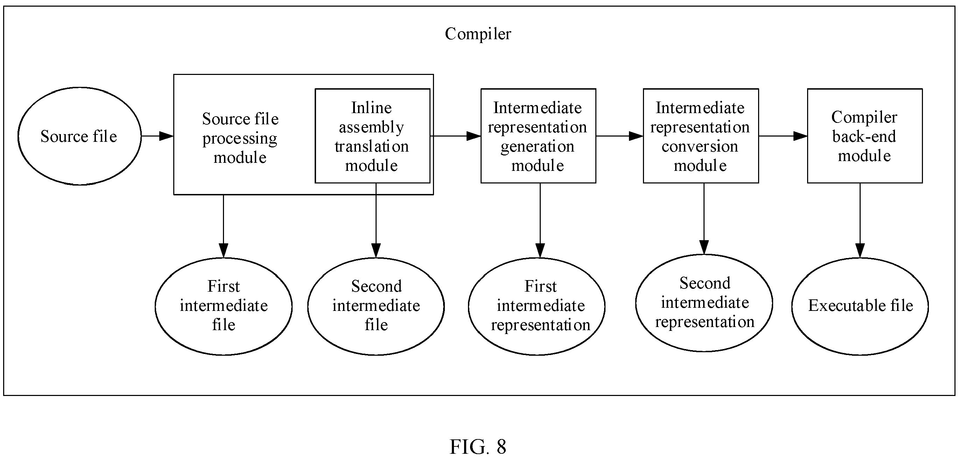

As shown in FIG. 8, the compiler includes a source file processing module, an intermediate representation generation module, an intermediate representation conversion module, and a compiler back-end module. The source file processing module includes an inline assembly translation module.

The source file processing module is configured to obtain the source file, and perform macro expansion processing on the source file, to obtain a first intermediate file. The source file is a C/C++ source file. The source file includes the inline assembly code suitable for the source architecture. The source file may be the source file in the source architecture in the code migration scenario, or may be the to-be-repaired source file in the code repair scenario.

The inline assembly translation module is configured to translate the inline assembly code in the first intermediate file into the inline assembly code or the compiler built-in function suitable for the target architecture, to obtain a second intermediate file.

The intermediate representation generation module is configured to convert the second intermediate file into a first intermediate representation.

The intermediate representation conversion module is configured to convert the first intermediate representation into a second intermediate representation.

The compiler back-end module is configured to process the second intermediate representation as the executable file suitable for the target architecture.

In this scenario, the source file processing module may convert the volatile memory access code in the source file into the atomic memory access code. Alternatively, the intermediate representation conversion module may convert the volatile memory access code in the first intermediate representation into the atomic memory access code.

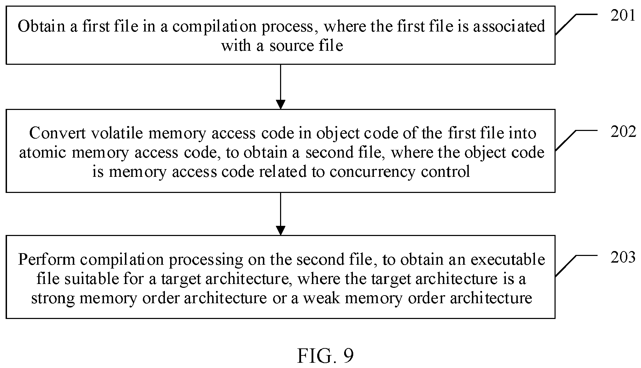

Based on the foregoing computer system, as shown in FIG. 9, an embodiment of the code processing method in the hardware memory order architecture provided in this embodiment of this application includes the following steps.

201: Obtain a first file in a compilation process, where the first file is associated with a source file.

In this application, the first file may be the source file, or may be an intermediate representation (intermediate representation, IR) in the compilation process.

202: Convert volatile memory access code in object code of the first file into atomic memory access code, to obtain a second file, where the object code is memory access code related to concurrency control.

The memory access code related to concurrency control may be understood as code other than a driver (driver).

203: Perform compilation processing on the second file, to obtain an executable file suitable for a target architecture, where the target architecture is a strong memory order architecture or a weak memory order architecture.

A process of performing compilation processing on the second file may include inserting a memory fence (fence) based on an atomic, generating binary code, linking the binary code, and other processes.

In this embodiment of this application, the volatile memory access code in the memory access code related to concurrency control may be converted into the atomic memory access code in the compilation process. An atomic memory access may ensure that code execution during execution of a program by the processor is consistent with code writing, so that an unexpected behavior of code such as suspension or deadlock during running is reduced.

Optionally, before or after step 202, a separate memory fence in the object code may be further deleted. The separate memory fence is a separate inline assembly instruction in the object code. The separate inline assembly instruction is a memory fence instruction. This helps further optimize the code.

The above describes content involved in both a code migration scenario and a code repair scenario. A difference is that the code migration scenario involves conversion of inline assembly code, while the code repair scenario does not require conversion of the inline assembly code. In addition, in this embodiment of this application, conversion of the volatile memory access code into the atomic memory access code may be performed in the intermediate representation, or conversion of the volatile memory access code into the atomic memory access code may be performed in the source file. Descriptions are separately provided below.

First: Conversion of the volatile memory access code into the atomic memory access code is performed in the intermediate representation.

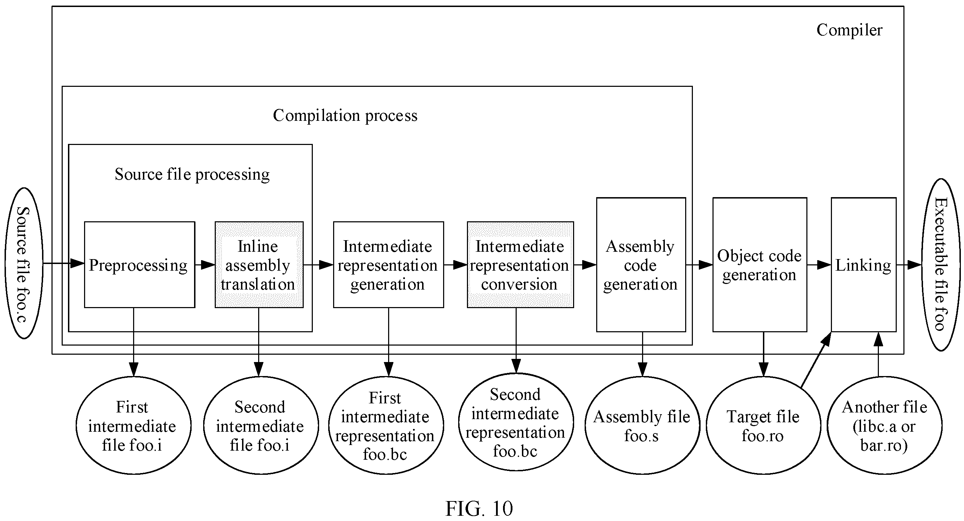

As shown in FIG. 10, in the code migration scenario, the code processing process may include: a source file processing process, an intermediate representation generation process, an intermediate representation conversion process, an assembly code generation process, an object code generation process, and a linking process.

In the source file processing process, the compiler obtains the source file from a source architecture. In this scenario example, the source file is in a foo.c format. The source file includes the inline assembly code.

The source file processing process includes a preprocessing process and an inline assembly translation process. In the source file processing process, macro expansion processing is performed on the source file to obtain a first intermediate file. The first intermediate file is in a foo.i format.

In the inline assembly translation process, the inline assembly code in the first intermediate file is translated. The translation process may include: converting the inline assembly code suitable for the source architecture into inline assembly code or a compiler built-in function capable of running in the target architecture, to obtain a second intermediate file. The second intermediate file is in a foo.i format. A specific translation process may be: converting the inline assembly code suitable for the source architecture into an abstract syntax tree (abstract syntax tree, AST); and converting, based on semantics of each branch in the abstract syntax tree, each branch into inline assembly code or a compiler built-in function suitable for the target architecture, to obtain the second intermediate file. Each branch may be understood as an input branch, an output branch, or the like.

The AST is an abstract representation of a syntax structure of a source code, and represents a syntax structure of programming language in a tree form. Each node on the tree indicates a structure in the source code. The source program corresponds to the abstract syntax tree one to one.

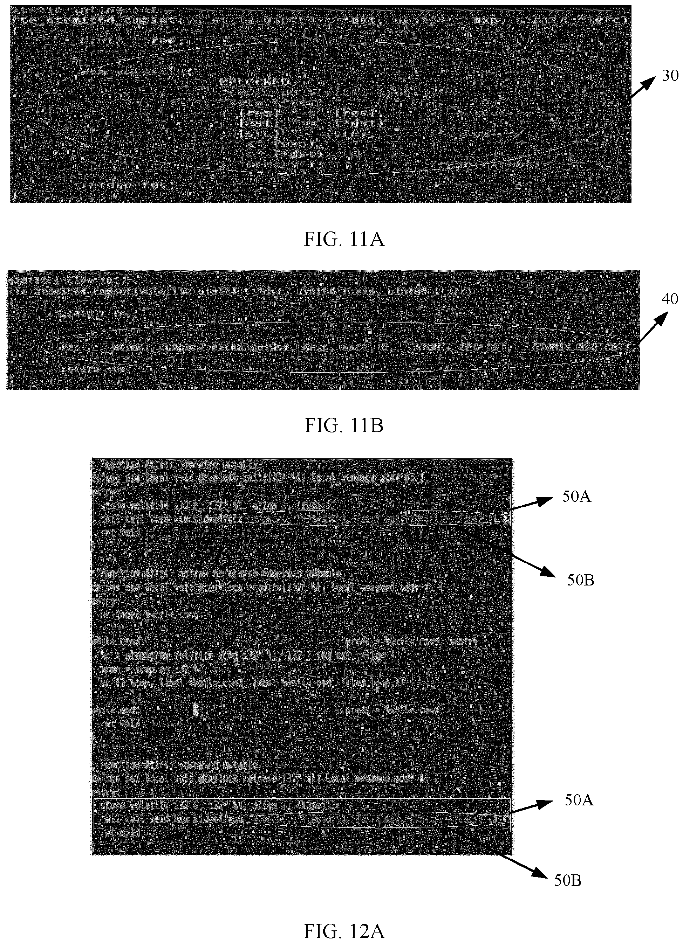

The translation process of the inline assembly code may be further understood with reference to FIG. 11A and FIG. 11B. FIG. 11A shows an example of the inline assembly code suitable for the source architecture (x86). In this example, the inline assembly code 30 includes the following content:

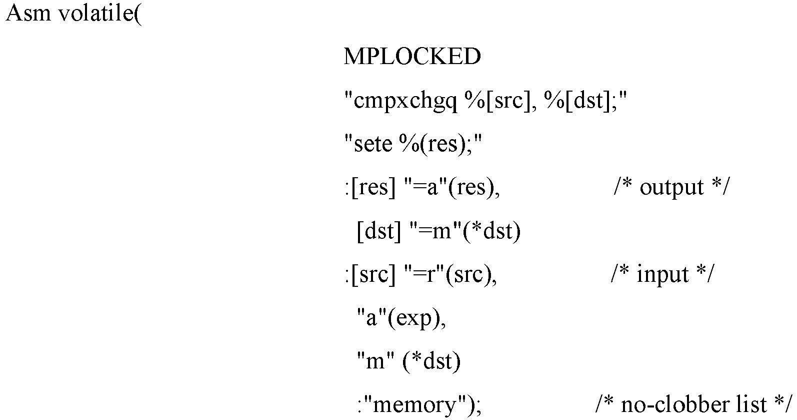

The AST shown in FIG. 11A may be statically scanned to recognize a specific code pattern of inline assembly: MPLOCKED; cmpxchgq; sete. The specific code pattern corresponds to compiler builtins: _atomic _compare _exchange. An input (&src,0) and an output (dst,&exp) of the compiler built-in function are obtained by analyzing an input parameter (:[src] "=r" (src)) and an output parameter (:[res] "=a" (res), [dst] "=m" (*dst)) of the inline assembly code in the AST. Based on a semantic relationship between the two architectures, the example shown in FIG. 11A may be converted into an example shown in FIG. 11B. The inline assembly code 30 in FIG. 11A is converted into a compiler built-in function 40 in FIG. 11B, that is, the following code content:
Res=_atomic_compare_exchange(dst,&exp,&src,0,_ATOMIC_SEQ_CST, _ATOMIC_SEQ_CST).

The foregoing preprocessing process is completed to obtain the second intermediate file. The second intermediate file is converted into a first intermediate representation through the intermediate representation generation (LLVM IR Generation) process. The first intermediate representation may be in a foo.bc format.

Further, the first intermediate representation may be converted into a second intermediate representation through the intermediate representation conversion process. The second representation may be in the foo.bc format.

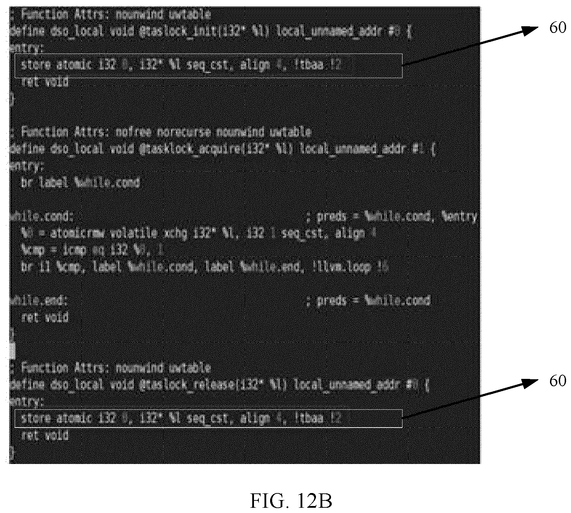

A process of converting the first intermediate representation into the second intermediate representation may include: converting the volatile memory access code in the object code of the first intermediate representation into the atomic memory access code, and deleting the separate memory fence in the object code. This process may be understood with reference to FIG. 12A and FIG. 12B.

FIG. 12A shows an example of the first intermediate representation using an LLVM IR as an example.

In this embodiment of this application, the first intermediate representation includes two pieces of volatile-related code, which respectively appear in parts marked with 50A in FIG. 12A. Specific code content is as follows:
Store volatile 132 0, 132* l,align 4, !tbaa !2
Tail call void asm sideeffect "mfence", "-[memory],-[dirflag],-[fpsr],-[flags] "()#2
"mfence", "-[memory],-[dirflag],-[fpsr],-[flags]" ()#2 is a separate memory fence, and is marked with 50B in FIG. 12A.

In this embodiment of this application, in the intermediate representation conversion process, the volatile-related code is converted into atomic-related code, and a separate memory fence is deleted, to obtain code marked with 60 in FIG. 12B: Store atomic 132 0, 132* l,align 4, !tbaa !2.

After the second intermediate representation is obtained through the intermediate representation conversion process, the second intermediate representation may be converted into an assembly file through the assembly code generation process. The assembly file may be in a foo.s format. In this process, a fence may be inserted each time an atomic is encountered in a code recognition process. In this way, impact of insertion of excessive fences on performance is avoided.

Further, the assembly file may be further converted into a target file foo.ro. Then the linking process is performed to link the target file foo.ro with another file, for example, a file in a libc.a format or/and a file in a bar.ro format, to obtain the executable file in the target architecture.

The foregoing compilation file, object file, and executable file are all files in different formats suitable for the target architecture.

Second: Conversion of the volatile memory access code into the atomic memory access code is performed in the source file.

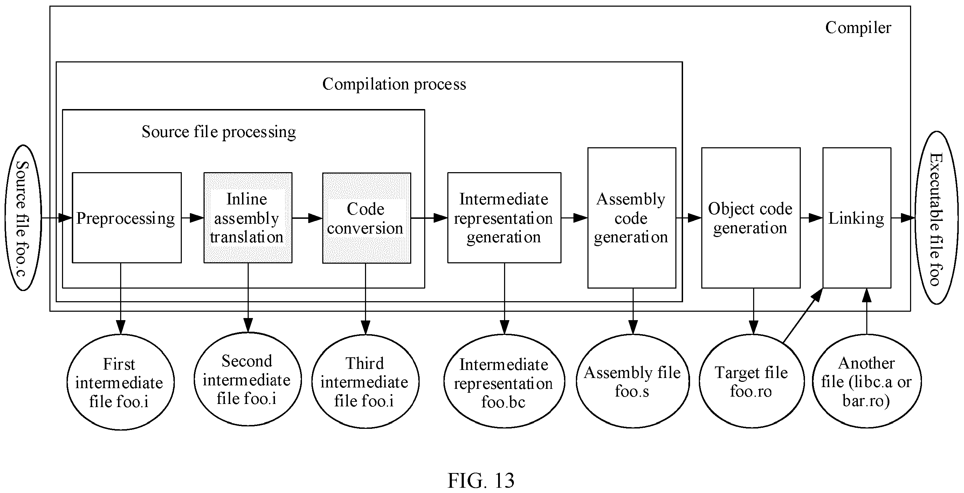

As shown in FIG. 13, in the code migration scenario, the code processing process may include: a source file processing process, an intermediate representation generation process, an assembly code generation process, an object code generation process, and a linking process.

In the source file processing process, the compiler obtains the source file from a source architecture. In this scenario example, the source file is in a foo.c format. The source file includes the inline assembly code.

The source file processing process includes a preprocessing process, an inline assembly translation process, and a code conversion process. In the source file processing process, macro expansion processing is performed on the source file to obtain a first intermediate file. The first intermediate file is in a foo.i format. The inline assembly translation process may be understood with reference to the inline assembly translation process corresponding to FIG. 10, FIG. 11A, and FIG. 11B. The code conversion process includes converting the volatile memory access code in a second intermediate file into the atomic memory access code, and deleting the separate memory fence in the object code, to obtain a third intermediate file. This process may be understood with reference to FIG. 12A and FIG. 12B.

In the intermediate representation generation process, the third intermediate file may be converted into the intermediate representation.

The assembly code generation process, the object code generation process, and the linking process may be understood with reference to corresponding content in FIG. 10. Details are not described herein again.

The above describes how the compiler processes code in the code migration scenario. In the code repair scenario, only the inline assembly translation process in the code migration scenario needs to be omitted.

In a process of determining the solution of this application, an engineer of this application performs a plurality of tests. The following uses a scenario in which a ringbuffer in an x86 architecture is compiled to Aarch64 as an example for description.

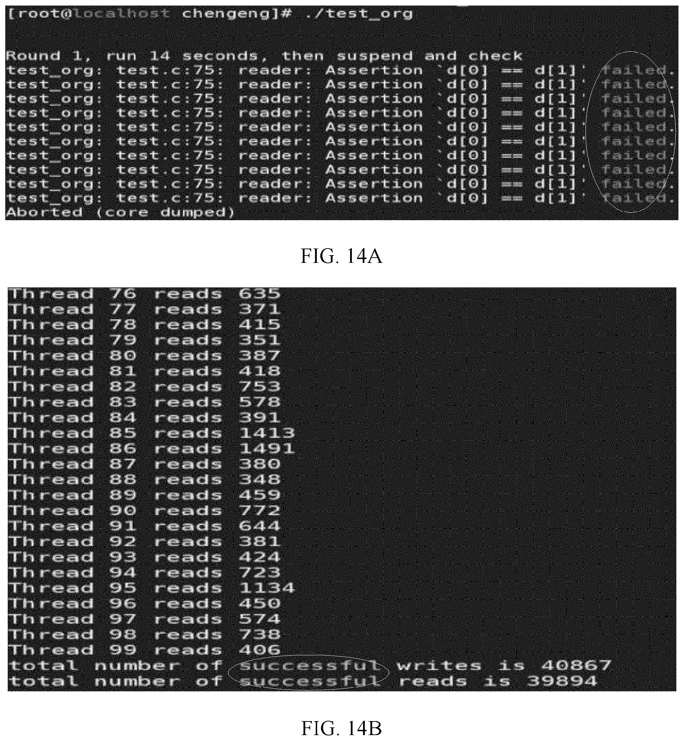

As shown in FIG. 14A, an execution result of directly compiling the ringbuffer in the x86 architecture in a data plane development kit (data plane development kit, DPDK) into a binary format of Aarch64 shows that a plurality of lines of code fail to run (failed).

As shown in FIG. 14B, an execution result of compiling the ringbuffer in the x86 architecture in a DPDK into a binary format of Aarch64 by using the solution provided in this embodiment of this application shows that running succeeds (successful).

According to the solution provided in this embodiment of this application, the inline assembly code may be automatically translated, and in an optimization phase of the intermediate representation, a volatile memory access is changed to an atomic memory access to ensure order consistency of code. This solution may be applied to a program with any quantity of code lines, and has more significant effect when the quantity of code lines is larger. If the quantity of code lines exceeds 10,000, code processing efficiency may be significantly improved than that in the conventional technology.

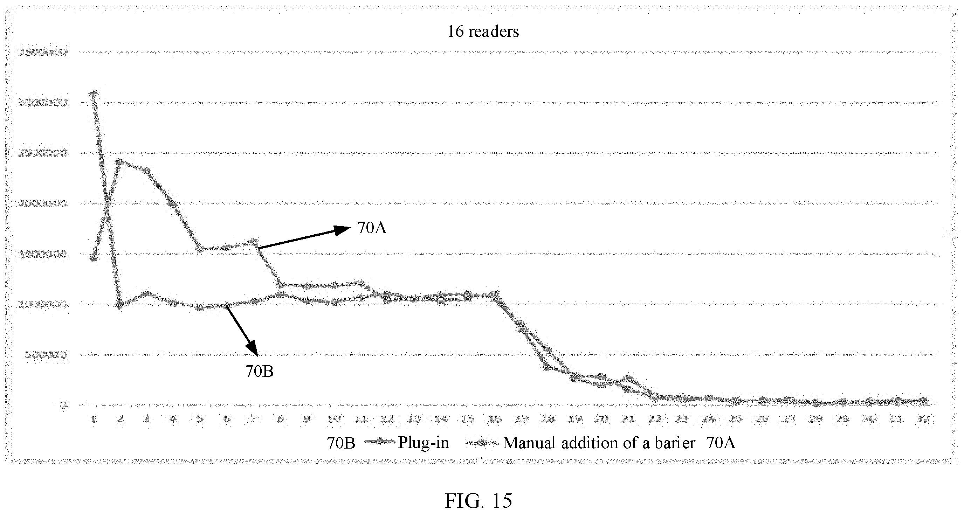

In addition, in this embodiment of this application, FIG. 15 further shows a running result 70A of code manually modified by an expert in the ringbuffer in the x86 architecture in the DPDK and a running result 70B after the ring buffer in the DPDK is migrated to Aarch64 by using the solution of this application. In FIG. 15, a horizontal coordinate is a quantity of writers, a vertical coordinate is a throughput, and a quantity of readers is 16. In this application, both the writer and the reader are threads. It may be learned from a comparison between the curve 70A and the curve 70B that code migrated by using the solution of this application has a better throughput.

The above describes the code processing method in a hardware memory order architecture. The following describes, with reference to the accompanying drawings, a code processing apparatus 80 in a hardware memory order architecture provided in an embodiment of this application.

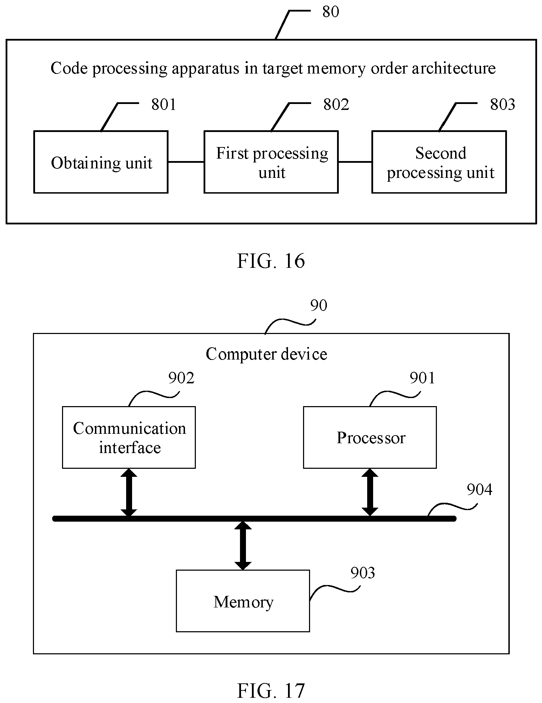

As shown in FIG. 16, an embodiment of the code processing apparatus 80 in a hardware memory order architecture according to this embodiment of this application includes:
an obtaining unit 801, configured to obtain a first file in a compilation process, where the first file is associated with a source file, and the obtaining unit 801 may perform step 201 in the foregoing method embodiment;
a first processing unit 802, configured to convert volatile memory access code in object code of the first file obtained by the obtaining unit 801 into atomic (atomic) memory access code, to obtain a second file, where the object code is memory access code related to concurrency control, and the first processing unit 802 may perform step 202 in the foregoing method embodiment; and
a second processing unit 803, configured to perform compilation processing on the second file obtained by the first processing unit 802 through processing, to obtain an executable file suitable for a target architecture, where the target architecture is a strong memory order architecture or a weak memory order architecture, and the second processing unit 803 may perform step 203 in the foregoing method embodiment.

In this embodiment of this application, the volatile memory access code in the memory access code related to concurrency control may be converted into the atomic memory access code in the compilation process. An atomic memory access may ensure that code execution during execution of a program by a processor is consistent with code writing, so that an unexpected behavior of code such as suspension or deadlock during running is reduced.

Optionally, the first processing unit 802 is further configured to delete a separate memory fence in the object code. The separate memory fence is a separate inline assembly instruction in the object code. The separate inline assembly instruction is a memory fence instruction.

Optionally, the first file is a source file including the source code. The source file includes inline assembly code suitable for a source architecture. The first processing unit 802 is further configured to convert the inline assembly code suitable for the source architecture into inline assembly code or a compiler built-in function capable of running in the target architecture. The source architecture and the target architecture are two different hardware memory order architectures.

Optionally, the first file is a first intermediate representation. The second file is a second intermediate representation. The obtaining unit 801 is configured to: obtain a source file corresponding to a source architecture, where the source file includes inline assembly code suitable for the source architecture; convert the inline assembly code suitable for the source architecture into inline assembly code or a compiler built-in function capable of running in the target architecture, to obtain an intermediate file, where the source architecture and the target architecture are two different hardware memory order architectures; and convert the intermediate file into the first intermediate representation.

Optionally, the obtaining unit 801 is configured to: convert the inline assembly code suitable for the source architecture into an abstract syntax tree; and convert, based on semantics of each branch in the abstract syntax tree, each branch into inline assembly code or a compiler built-in function suitable for the target architecture, to obtain the intermediate file.

In this embodiment of this application, the obtaining unit 801 may correspond to the source file processing modules and the intermediate representation generation modules in FIG. 7 and FIG. 8. The first processing unit 802 may correspond to the intermediate representation conversion modules in FIG. 7 and FIG. 8. The second processing unit 803 may correspond to the compiler back-end modules in FIG. 7 and FIG. 8.

The apparatus 80 described above may be understood with reference to corresponding content in the foregoing method embodiment, and details are not described herein again.

FIG. 17 is a schematic diagram of a possible logical structure of a computer device 90 according to an embodiment of this application. The computer device 90 includes a processor 901, a communication interface 902, a memory 903, and a bus 904. The processor 901, the communication interface 902, and the memory 903 are connected to each other through the bus 904. In this embodiment of this application, the processor 901 is configured to control and manage an action of the computer device 90. For example, the processor 901 is configured to perform the steps in the method embodiment corresponding to FIG. 9. The communication interface 902 is configured to support the computer device 90 in communication. The memory 903 is configured to: store program code and data of the computer device 90, and provide memory space for a process group.

The processor 901 may be a central processing unit, a general-purpose processor, a digital signal processor, an application-specific integrated circuit, a field programmable gate array or another programmable logic device, a transistor logic device, a hardware device, or any combination thereof. The processor 901 may implement or execute various example logical blocks, modules, and circuits described with reference to content disclosed in this application. Alternatively, the processor 901 may be a combination for implementing a computing function, for example, a combination of one or more microprocessors, or a combination of a digital signal processor and a microprocessor. The bus 904 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one bold line is used for representation in FIG. 17, but this does not mean that there is only one bus or only one type of bus.

Another embodiment of this application further provides a computer-readable storage medium. The computer-readable storage medium stores computer-executable instructions. When a processor of a device executes the computer-executable instructions, the device performs the steps performed by the processor in FIG. 1 to FIG. 15.

Another embodiment of this application further provides a computer program product. The computer program product includes computer-executable instructions. The computer-executable instructions are stored in a computer-readable storage medium. When a processor of a device executes the computer-executable instructions, the device performs the steps performed by the processor in FIG. 1 to FIG. 15.

Another embodiment of this application further provides a chip system. The chip system includes a processor. The processor is configured to support a memory management apparatus in implementing the steps performed by the processor in FIG. 1 to FIG. 15. In a possible design, the chip system may further include a memory. The memory is configured to store program instructions and data that are necessary for the data writing apparatus. The chip system may include a chip, or may include a chip and another discrete device.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that for the purpose of convenient and brief description, for a detailed working process of the foregoing system, apparatus, and unit, reference may be made to a corresponding process in the foregoing method embodiment, and details are not described again herein.

In the several embodiments provided in embodiments of this application, it should be understood that the disclosed system, apparatus, and method may be implemented in other manners. For example, the apparatus embodiment described above is merely an example. For example, division into units is merely logical function division, and there may be another division manner in actual implementation. For example, a plurality of units or components may be combined or may be integrated into another system, or some characteristics may be ignored or not performed. In addition, the displayed or discussed mutual couplings or direct couplings or communication connections may be indirect couplings or communication connections through some interfaces, apparatuses, or units, and may be implemented in electrical, mechanical, or other forms.

The units described as separate parts may or may not be physically separate, and the parts displayed as units may or may not be physical units, may be located at one location, or may be distributed on a plurality of network units. Some or all of the units may be selected based on actual requirements to achieve the objective of the solution of this embodiment.

In addition, functional units in embodiments of this application may be integrated into one processing unit, each of the units may exist alone physically, or two or more units may be integrated into one unit.

When functions are implemented in a form of a software functional unit and sold or used as an independent product, the functions may be stored in a computer-readable storage medium. Based on such an understanding, the technical solutions in embodiments of this application essentially, the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps in the method in embodiments of this application. The foregoing storage medium includes any medium capable of storing program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application, but the protection scope of embodiments of this application is not limited thereto.

## Claims

1. A code processing method in a hardware memory order architecture, applied to a computer system and comprising:
obtaining a first file in a compilation process, wherein the first file is associated with a source file;
converting volatile memory access code in object code of the first file into atomic (atomic) memory access code, to obtain a second file, wherein the object code is memory access code related to concurrency control; and
performing compilation processing on the second file, to obtain an executable file suitable for a target architecture, wherein the target architecture is a strong memory order architecture or a weak memory order architecture.

2. The code processing method according to claim 1, wherein the method further comprises:
deleting a separate memory fence in the object code, wherein the separate memory fence is a separate inline assembly instruction in the object code, and the separate inline assembly instruction is a memory fence instruction.

3. The code processing method according to claim 1 or 2, wherein the first file is a source file comprising source code, the source file comprises inline assembly code suitable for a source architecture, and the method further comprises:
converting the inline assembly code suitable for the source architecture into inline assembly code or a compiler built-in function capable of running in the target architecture, wherein the source architecture and the target architecture are two different hardware memory order architectures.

4. The code processing method according to claim 1 or 2, wherein the first file is a first intermediate representation, the second file is a second intermediate representation, and the obtaining a first file in a compilation process comprises:
obtaining a source file corresponding to a source architecture, wherein the source file comprises inline assembly code suitable for the source architecture;
converting the inline assembly code suitable for the source architecture into inline assembly code or a compiler built-in function capable of running in the target architecture, to obtain an intermediate file, wherein the source architecture and the target architecture are two different hardware memory order architectures; and
converting the intermediate file into the first intermediate representation.

5. The code processing method according to claim 3 or 4, wherein the converting the inline assembly code suitable for the source architecture into inline assembly code or a compiler built-in function capable of running in the target architecture comprises:
converting the inline assembly code suitable for the source architecture into an abstract syntax tree; and
converting, based on semantics of each branch in the abstract syntax tree, each branch into inline assembly code or a compiler built-in function suitable for the target architecture.

6. The code processing method according to any one of claims 1 to 5, wherein the source file is a C/C++ source file.

7. The code processing method according to any one of claims 3 to 5, wherein
the source architecture is a strong memory order architecture, and the target architecture is a weak memory order architecture; or
the source architecture is a weak memory order architecture, and the target architecture is a strong memory order architecture; or
the source architecture is a strong memory order architecture, and the target architecture is a strong memory order architecture; or
the source architecture is a weak memory order architecture, and the target architecture is a weak memory order architecture.

8. A code processing apparatus in a hardware memory order architecture, comprising:
an obtaining unit, configured to obtain a first file in a compilation process, wherein the first file is associated with a source file;
a first processing unit, configured to convert volatile memory access code in object code of the first file obtained by the obtaining unit into atomic (atomic) memory access code, to obtain a second file, wherein the object code is memory access code related to concurrency control; and
a second processing unit, configured to perform compilation processing on the second file obtained by the first processing unit through processing, to obtain an executable file suitable for a target architecture, wherein the target architecture is a strong memory order architecture or a weak memory order architecture.

9. The code processing apparatus according to claim 8, wherein
the first processing unit is further configured to delete a separate memory fence in the object code, wherein the separate memory fence is a separate inline assembly instruction in the object code, and the separate inline assembly instruction is a memory fence instruction.

10. The code processing apparatus according to claim 8 or 9, wherein the first file is a source file comprising source code, and the source file comprises inline assembly code suitable for a source architecture; and
the first processing unit is further configured to convert the inline assembly code suitable for the source architecture into inline assembly code or a compiler built-in function capable of running in the target architecture, wherein the source architecture and the target architecture are two different hardware memory order architectures.

11. The code processing apparatus according to claim 8 or 9, wherein the first file is a first intermediate representation, and the second file is a second intermediate representation; and
the obtaining unit is configured to:
obtain a source file corresponding to a source architecture, wherein the source file comprises inline assembly code suitable for the source architecture;
convert the inline assembly code suitable for the source architecture into inline assembly code or a compiler built-in function capable of running in the target architecture, to obtain an intermediate file, wherein the source architecture and the target architecture are two different hardware memory order architectures; and
convert the intermediate file into the first intermediate representation.

12. The code processing apparatus according to claim 11, wherein
the obtaining unit is configured to:
convert the inline assembly code suitable for the source architecture into an abstract syntax tree; and
convert, based on semantics of each branch in the abstract syntax tree, each branch into inline assembly code or a compiler built-in function suitable for the target architecture, to obtain the intermediate file.

13. A computing device, comprising one or more processors and a computer-readable storage medium storing a computer program, wherein
when the computer program is executed by the one or more processors, the method according to any one of claims 1 to 7 is implemented.

14. A chip system, comprising a plurality of processors, wherein the plurality of processors are invoked to perform the method according to any one of claims 1 to 7.

15. A computer-readable storage medium, wherein the computer-readable storage medium stores a computer program; and when the computer program is executed by one or more processors, the method according to any one of claims 1 to 7 is implemented.

16. A computer program product, comprising a computer program, wherein the computer program, when executed by on one or more processors, is used to implement the method according to any one of claims 1 to 7.
